# EUROPÄISCHE PATENTSCHRIFT

(11) **EP 3 086 384 B1**
(45) Veröffentlichungstag und Bekanntmachung des Hinweises auf die Patenterteilung: **25.10.2017**
(21) Anmeldenummer: 15164762.5
(22) Anmeldetag: 23.04.2015
(51) Int. Cl.: H01M 2/16, H01M 2/18

(54) **RÖHRENFÖRMIGE TASCHEN VOM PATRONENGURT-TYP FÜR BLEI-SÄURE BATTERIEN AUS EINEM TEXTILEN FLÄCHENGEBILDE TEXTILES FLÄCHENGEBILDE**
TUBULAR BAGS OF THE CARTRIDGE BELT TYPE FOR LEAD-ACID BATTERIES MADE FROM A TEXTILE SHEET FABRIC
POCHES TUBULAIRES DU TYPE BANDE À CARTOUCHE POUR BATTERIES DU TYPE PLOMB-ACIDE EN UNE STRUCTURE PLATE TEXTILE

(43) Veröffentlichungstag der Anmeldung: 26.10.2016
(73) Patentinhaber: Johns Manville Europe GmbH, 86399 Bobingen (DE)
(72) Erfinder: Ketzer, Michael, 97903 Collenberg (DE); Nandi, Souvik, 80130 Highlands Ranch (US); Guo, Zhihua, 80112 Centennial (US); Groh, Dr. Werner, 86830 Schwabmünchen (DE)
(74) Vertreter: Mai Dörr Besier European Patent Attorneys

(56) Entgegenhaltungen:
- EP-A1- 1 950 768
- DE-A1-102013 105 334

## Beschreibung

Die Erfindung betrifft neuartige röhrenförmige Taschen vom Patronengurttyp für Blei-Säure Batterien aus einem textilen Flächengebilde, die auch als "Gauntlets" bezeichnet werden, deren Herstellung, sowie Stromspeicherbatterien des Blei-Säure-Typs diese enthaltend.

Röhrchentaschen-Systeme für Blei-Säure-Batterien, die insbesondere im industriellen Bereich (z.B. Gabelstapler) verwendet werden, benötigen eine große Robustheit, gute Ladeeffizienz und geringe Herstellkosten.

Hierbei umschließen die Röhrchentaschen die stabmäßig ausgebildete Elektrodenmasse und eine große Anzahl von einzelnen Röhren, die meist Patronengurtartig ausgebildet sind, bilden die positive Elektrode der Stromspeicherbatterie. Aufgrund der großen Anzahl dieser stabförmig ausgebildeten Elektroden wird eine große aktive Elektrodenoberfläche erreicht.

Die Röhrchentaschen dienen in erster Linie zur mechanischen Stabilität der Elektrode. Ohne Ummantelung der röhrenförmigen positiven Elektrode käme es bereits nach wenigen Lade- und Entladezyklen zu einer rapiden Abnahme der Strukturstabilität und Festigkeit des Elektrodenmaterials, was letztendlich zur Zerstörung der Elektrode durch mechanische Degradation führen würde.

Wie bei Stromspeicherbatterien des Blei-Säure-Typs üblich, müssen die Materialien, welche die Röhrchentaschen bilden, somit bestimmte technische Eigenschaften aufweisen. Aufgrund der Volumenänderung der Elektrode bei jedem Lade- und Entladezyklus zählen hierzu insbesondere Festigkeit und Elastizität des Taschenmaterials. Daneben sind chemische Stabilität, ausreichende Porosität und hohe elektrische Leitfähigkeit weitere wichtige Voraussetzungen. Da bestimmte Substanzen sich schädlich auf den Batteriebetrieb auswirken, ist das Fehlen dieser Substanzen (insbesondere bestimmte Metallionen) eine weitere Grundvoraussetzung.
Die Herstellung von Röhrchentaschen ("Gauntlets") ist grundsätzlich bereits aus dem Stand der Technik bekannt, beispielsweise aus WO 2006/117320 und WO 2007/090893.

Dennoch besteht ein ständiger Bedarf, verbesserte Röhrchentaschen bereitzustellen, welche einerseits den technischen Anforderungen und den gesetzlichen Bestimmungen genügen, andererseits unter wirtschaftlichen Aspekten verfügbar sind und verbesserte anwendungstechnische Eigenschaften aufweisen. Insbesondere besteht ein Bedarf an Stromspeicherbatterien, die einen geringen elektrischen Innenwiderstand aufweisen und damit ein verbessertes Leistungsvermögen zur Verfügung stellen können.

Aufgabe der vorliegenden Erfindung war es somit, verbesserte Röhrchentaschen auf Basis von textilen Flächen bereitzustellen, die einerseits den technischen Anforderungen und den gesetzlichen Bestimmungen genügen, andererseits unter wirtschaftlichen Aspekten verfügbar sind und zusätzlich verbesserte anwendungstechnische Eigenschaften, insbesondere einen verringerten Batterieinnenwiderstand aufweisen. Eine weitere Aufgabe ist es, dass die verbesserten Röhrchentaschen mittels der bekannten und etablierten Verfahren verarbeitet werden können, so dass Investitionen gering gehalten werden können.

Gegenstand der vorliegenden Erfindung sind somit röhrenförmige Taschen vom Patronengurttyp für Blei-Säure Batterien aus einem textilen Flächengebilde, dadurch gekennzeichnet, dass das textile Flächengebilde, welches die röhrenförmigen Taschen bildet, mit mindestens einem verfestigten Binder mit thermoplastischen Eigenschaften und mit mindestens einem elektrisch leitfähigen Additiv ausgerüstet ist.

### TEXTILES FLÄCHENGEBILDE

Der Begriff "textiles Flächengebilde" ist im Rahmen dieser Beschreibung in seiner breitesten Bedeutung zu verstehen. Dabei kann es sich um alle Gebilde aus Fasern handeln die nach einer flächenbildenden Technik hergestellt worden sind. Bei den faserbildenden Materialien handelt es sich um Naturfasern, Mineralfasern, Glasfasern, insbesondere aber um Fasern aus synthetischen Polymeren. Als textiles Flächengebilde im Sinne der vorliegenden Erfindung werden insbesondere Gewebe, Gelege, Gestricke, Gewirke, Vliese, besonders bevorzugt Gewebe und/oder Vliese, verstanden.

Innerhalb der textilen Flächengebilde auf Basis von synthetischen Polymeren sind Vliese aus Fasern aus synthetischen Polymeren bevorzugt. Neben Vliesen aus Stapelfasern, Schnittfasern oder Reißfasern, d.h. Vliesen auf Basis von endlichen Synthesefasern, sind insbesondere Spinnvliese, sogenannte Spunbonds, die durch eine Wirrablage frisch schmelzgesponnener Filamente erzeugt werden, bevorzugt. Diese Spinnvliese bestehen aus Endlos-Synthesefasern aus schmelzspinnbaren Polymermaterialien. Geeignete Polymermaterialien sind beispielsweise Polyamide, wie z.B. Polyhexamethylen-diadipamid, Polycaprolactam, aromatische oder teilaromatische Polyamide ("Aramide"), aliphatische Polyamide, wie z.B. Nylon, teilaromatische oder vollaromatische Polyester, Polyphenylensulfid (PPS), Polymere mit Ether- und Keto-gruppen, wie z.B. Polyetherketone (PEK) und Poly-etheretherketon (PEEK), Polyolefine, wie z.B. Polyethylen oder Polypropylen, oder Polybenzimidazole.

Bevorzugt bestehen die Spinnvliese aus schmelzspinnbaren Polyestern. Als Polyestermaterial kommen im Prinzip alle zur Faserherstellung geeigneten bekannten Typen in Betracht. Derartige Polyester bestehen überwiegend aus Bausteinen, die sich von aromatischen Dicarbonsäuren und von aliphatischen Diolen ableiten. Gängige aromatische Dicarbonsäurebausteine sind die zweiwertigen Reste von Benzoldicarbonsäuren, insbesondere der Terephthalsäure und der Isophthalsäure; gängige Diole haben 2 bis 4 C-Atome, wobei das Ethylenglycol besonders geeignet ist. Besonders vorteilhaft sind Spinnvliese, die zu mindestens 85 mol % aus Polyethylenterephthalat bestehen. Die restlichen 15 mol % bauen sich dann aus Dicarbonsäureeinheiten und Glycoleinheiten auf, die als sogenannte Modifizierungsmittel wirken und die es dem Fachmann gestatten, die physikalischen und chemischen Eigenschaften der hergestellten Filamente gezielt zu beeinflussen. Beispiele für solche Dicarbonsäureeinheiten sind Reste der Isophthalsäure oder von aliphatischen Dicarbonsäure wie z.B. Glutarsäure, Adipinsäure, Sebazinsäure; Beispiele für modifizierend wirkende Diolreste sind solche von längerkettigen Diolen, z. B. von Propandiol oder Butandiol, von Di- oder Triethylenglycol oder, sofern in geringer Menge vorhanden, von Polyglycol mit einem Molgewicht von ca. 500 bis 2000.

Besonders bevorzugt sind Polyester, die mindestens 95 mol % Polyethylenterephthalat (PET) enthalten, insbesondere solche aus unmodifiziertem PET.

Die erfindungsgemäß eingesetzten Spinnvliese können als verfestigten Binder mit thermoplastischen Eigenschaften auch mindestens einen thermoplastischen Binder aufweisen, dessen Schmelzpunkt min. 10°C, vorzugsweise min. 20°C, unterhalb des Schmelzpunktes der Fasern des Spinnvlieses liegt.
Der thermoplastische Binder kann in Form separater Binderfaser, als Pulver und/oder Granulat in das Spinnvlies eingebracht werden. Des Weiteren kann der thermoplastische Binder auch in Form der niedrigschmelzenden Komponente einer Bikomponentenfaser vorliegen.

Die Menge an thermoplastischen Binder beträgt für diese Ausführungsform 5 - 50 Gew.-%, vorzugsweise 10 - 30 Gew.-%, jeweils bezogen auf das Gesamtgewicht des Spinnvlieses.

Insofern der thermoplastische Binder in Form einer separaten Binderfaser, eines Granulates oder in Form der niedrigschmelzenden Komponente einer Bikomponentenfaser eingebracht wird, spricht man von einem schmelzbinderverfestigten Spinnvlies.

Das schmelzbinderverfestigte Spinnvlies umfasst somit Träger- und Schmelzklebefasern und/oder Bikomponentenfasern mit Träger- und Binderkomponente. Die Träger- und Schmelzklebefasern bzw. Komponenten können sich von beliebigen thermoplastischen fadenbildenden Polymeren ableiten. Trägerfasern können sich darüber hinaus auch von nicht schmelzenden fadenbildenden Polymeren ableiten. Derartige schmelzbinderverfestigte Spinnvliese sind beispielsweise grundsätzlich in EP-A-0,446,822 und EP-A-0,590,629 beschrieben.

Beispiele für Polymere, von denen sich die Trägerfasern bzw. Trägerfaserkomponenten ableiten können, sind Polyacrylnitril, im wesentlichen aliphatische Polyamide, wie Nylon 6.6, im wesentlichen aromatische Polyamide (Aramide), wie Poly-(p-phenylenterephthalat) oder Copolymere enthaltend einen Anteil an aromatischen m-Diamineinheiten zur Verbesserung der Löslichkeit oder Poly-(m-phenylenisophthalat), im wesentlichen aromatische Polyester, wie Poly-(p-hydroxybenzoat) oder vorzugsweise im wesentlichen aliphatische Polyester, wie Polyethylenterephthalat.

Der Anteil der beiden Fasertypen zueinander kann in weiten Grenzen gewählt werden, wobei darauf zu achten ist, dass der Anteil der Schmelzklebefasern den vorstehend genannten Anteil an thermoplastischem Binder nicht übersteigt. Durch Verklebung der Trägerfasern mit den Schmelzklebefasern wird eine für die gewünschte Anwendung ausreichende semistrukturelle Eigenschaft erhalten. Der Anteil des aus der Schmelzklebefaser stammenden Schmelzklebers im Spinnvlies beträgt üblicherweise 5 - 50 Gew.-%, vorzugsweise 10 - 30 Gew.-% (bezogen auf das Gesamtgewicht des Vliesstoffes).

Als Schmelzkleber kommen Schmelzpolymere aus der Gruppe der Polyester mit einem gegenüber dem Vliesstoff-Rohstoff um 10 bis 50 °C, vorzugsweise 30 bis 50 °C abgesenkten Schmelzpunkt in Betracht. Beispiele für derartige Schmelzkleber sind Polybutylenterephthalat oder durch Einkondensieren längerkettiger Diole und/oder von Isophthalsäure oder aliphatischen Dicarbonsäuren modifiziertes Polyethylenterephthalat.

Die Schmelzkleber werden vorzugsweise in Faserform als Stapelfasern oder Endlosfäden in das Spinnvliese eingebracht oder in Form sogenannter Bicomponentenfasern, wobei die vorstehend bezeichneten Materialien für die Trägerfasern die mechanische Festigkeit und die vorstehend bezeichneten Materialien für die Schmelzklebefasern die zweite Komponente der Bicomponentenfasern bilden, welche für die Verfestigung genutzt wird.

Vorzugsweise sind Träger- und Schmelzklebefasern aus einer Polymerklasse aufgebaut. Darunter ist zu verstehen, dass alle eingesetzten Fasern aus einer Substanzklasse so ausgewählt werden, dass diese nach Gebrauch problemlos recycliert werden können. Bestehen die Trägerfasern beispielsweise aus Polyester, so werden die Schmelzklebefasern ebenfalls aus Polyester, z.B. PBT bestehen oder aus einer Mischung von Polyestern, z. B. als Bikomponentenfaser mit PET im Kern und einen niedriger schmelzenden Polyethylenterephthalat-Copolymeren als Mantel ausgewählt. Darüber hinaus sind jedoch auch Bikomponentenfasern möglich, die aus unterschiedlichen Polymeren aufgebaut sind. Beispiele hierfür sind Bikomponentenfasern aus Polyester und Polyamid (Kern/Hülle).

Die Einzelfasertiter der Träger- und der Schmelzklebefasern können innerhalb der genannten Grenzen gewählt werden.

Die Herstellung der erfindungsgemäß eingesetzten Spinnvliese erfolgt mittels an sich bekannter Einzel-Maßnahmen und Vorrichtungen.

Das geschmolzene Polymer wird durch mehrere hintereinander geschaltete Reihen von Spinndüsen bzw. Gruppen von Spinndüsenreihen extrudiert und die ausgesponnenen Polymerströme werden in an sich bekannter Weise verstreckt, und z. B. unter Verwendung einer rotierenden Prallplatte in Streutextur auf einem Transportband abgelegt. Anschließend erfolgt die Verfestigung des Vlieses.

Neben den vorstehend beschriebenen Spinnvliesen aus Endlosfilamenten sind Vliese aus Stapelfasern, Schnittfasern oder Reißfasern, d.h. endlichen Fasern, ebenfalls bevorzugt. Diese Vliese werden üblicherweise aus den gleichen synthetischen Polymeren wie die Endlos-Fasern gebildet und können auch die vorstehend genannten thermoplastischen Binder bzw. Träger- und Bindefasern bzw. Bikomponentenfasern aufweisen, wobei der Anteil der thermoplastischen Binder ebenfalls 5 - 50 Gew.-%, vorzugsweise 10- 30 Gew.-%, jeweils bezogen auf das Gesamtgewicht des Vlieses, beträgt.

Insofern der thermoplastische Binder in Form einer separaten Binderfaser, eines Granulates oder in Form der niedrigschmelzenden Komponente einer Bikomponentenfaser eingebracht wird, spricht man von einem schmelzbinderverfestigten Vlies.

Die Vliese aus Stapelfasern, Schnittfasern oder Reißfasern können auch als sogenannte Hybridvliese ausgebildet sein. Hybridvliese bestehen aus einer Mischung aus Polymerfasern und Verstärkungsfasern, bevorzugte Verstärkungsfasern sind u.a. Kohlenstofffasern, insbesondere Kohlenstofffasern die eine elektrische Leitfähigkeit aufweisen, Glasfasern, Mineralfasern, Metallfasern. Bevorzugt sind Verstärkungsfasern die nicht auf organischen synthetischen Polymeren beruhen.

Neben den bereits erwähnten trockengelegten Vliesen sind auch nassgelegte Vliese, die aus organischen, anorganischen oder Misch-Fasern (Hybridvliese, s.u.) bestehen können, geeignet.

Der Faserdurchmesser der Fasern im textilen Flächengebilde beträgt üblicherweise 0,5-20µm, bevorzugt 6-13µm. Die Faserlänge, insofern keine Endlos-Filamente eingesetzt werden, beträgt 4-40mm, bevorzugt 6-20mm.

Die Durchführung der Verfestigung der Vliese, insbesondere der Spinnvliese, erfolgt ebenfalls mittels im Grundsatz bekannter Methoden, insbesondere mittels thermischer Kalandrierung und/oder durch mechanische oder hydrodynamische Vernadelung und/oder durch die Anwendung eines Binders.

Die erfindungsgemäß eingesetzten Flächengebilde aus Fasern aus synthetischen Polymeren sind vorzugsweise Vliese und/oder Spinnvliese.

Die in den Vliesen vorliegenden Fasern aus synthetischen Polymeren, insbesondere jedoch die Fasern der Spinnvliese, innerhalb derer Fasern auf Basis von Polyester besonders bevorzugt sind, weisen vorzugsweise einen Einzeltiter zwischen 1 und 16 dtex, vorzugsweise 2 bis 8 dtex, auf. Besonders bevorzugt sind hierbei Spinnvliese aus Polyesterfilamenten mit den vorstehend genannten Titern.

Die in den Vliesen vorliegenden Stapelfasern aus synthetischen Polymeren, innerhalb derer Fasern auf Basis von Polyester besonders bevorzugt sind, weisen vorzugsweise einen Einzeltiter zwischen 1 und 16 dtex, vorzugsweise 2 bis 8 dtex, auf. Die Stapellänge beträgt 10 - 100mm, vorzugsweise 20 - 40mm.

Das Flächengewicht der erfindungsgemäß eingesetzten Flächengebilde aus Fasern aus synthetischen Produkten, insbesondere aus synthetischen Polymeren beträgt zwischen 20 und 500 g/m², vorzugsweise zwischen 40 und 250 g/m². Die vorstehenden Angaben gelten auch für Vliese und/oder Spinnvliese, insbesondere für Spinnvliese auf Basis von schmelzspinnbaren synthetischen Polymeren, wobei Polyester besonders bevorzugt ist.

In einer weiteren Ausführungsform der Erfindung weisen derartige textile Flächengebilde mindestens eine Verstärkung auf. Diese ist vorzugsweise derart gestaltet, dass die Verstärkung eine Kraft aufnimmt, so dass sich im Kraft-DehnungsDiagramm (bei 20 °C) die Bezugskraft der Trägereinlage mit Verstärkung verglichen mit der Trägereinlage ohne Verstärkung im Bereich zwischen 0 und 1 % Dehnung an mindestens einer Stelle um mindestens 10 % unterscheidet.

In einer weiteren Ausführungsform kann die Verstärkung auch so eingebaut werden, dass eine Kraftaufnahme durch die Verstärkung erst bei höheren Dehnungen erfolgt.

Bevorzugte Verstärkungen bestehen aus wirtschaftlichen Gründen aus Glas-Multifilamenten in Form von - im Wesentlichen - parallelen Fadenscharen oder Gelegen. Meist erfolgt nur eine Verstärkung in Längsrichtung der Vliesstoffe durch - im Wesentlichen -parallel laufende Fadenscharen.

Die Verstärkungsfäden können als solche oder auch in Form eines eigenen textilen Flächengebildes, beispielsweise als Gewebe, Gelege, Gestrick, Gewirke oder als Vlies eingesetzt werden. Bevorzugt werden Verstärkungen mit zueinander parallel laufenden Verstärkungsgarnen, also Kettfadenscharen, sowie Gelege oder Gewebe.

Die Messung der Bezugskraft erfolgt nach EN 29073, Teil 3, an 5 cm breiten Proben bei 200mm Einspannlänge. Der Zahlenwert der Vorspannkraft, angegeben in Centinewton entspricht dabei dem Zahlenwert der Flächenmasse der Probe, angegeben in Gramm pro Quadratmeter.

Die Verstärkung kann durch Einbau der Verstärkungen im textilen Flächengebilde, an mindestens einer Seite des textilen Flächengebildes oder aber an einer beliebigen Stelle erfolgen, insbesondere in weiteren textilen Flächengebilden, die vom ersten textilen Flächengebilde verschieden sind oder als eigenständiges textiles Flächengebilde.

Für den erfindungsgemäßen Einsatz kann das textile Flächengebilde kann neben dem bereits beschriebenen textilen Flächengebilde noch weitere textile Flächengebilde aufweisen. Bevorzugt sind diese weiteren textilen Flächengebilde von dem erstgenannten textilen Flächengebilde verschieden, d.h. bestehen aus einem anderen Material.

Die weiteren textilen Flächengebilde können jedoch auch aus dem gleichen Material bestehen wie das erstgenannte textile Flächengebilde; sie weisen jedoch dann andere, von der erstgenannten textilen Fläche unterscheidbare Faserabmessungen auf. Beispielsweise können die vorstehend beschriebenen Spinnvliese aus Endlosfilamenten, Stapelfasern, Schnittfasern oder Reißfasern auch zusätzlich eine Schicht aus sogenannten Meltblownfasern aufweisen. Meltblownfasern werden mittels des Meltblownprozess aus thermoplastischen Polymeren hergestellt und weisen einen Faserdurchmesser von weniger als 4µm auf.

Für den erfindungsgemäßen Einsatz ist es erforderlich, dass das textile Flächengebilde frei von Schwermetallen ist, diese zumindest aber in Summe weniger als 10ppm (Gewichtsteile) enthält. Schädlich wirkende Schwermetalle sind insbesondere Pt, Au, Te, Ni, Co, Fe, Cu, Sb, Ag, Bi, Mn und Sn. Weiterhin muss das erfindungsgemäße textile Flächengebilde, insbesondere das Vlies, einen Thermoschrumpf von > 0,1% (160°C, 10 min) aufweisen, um bei der Formung der Gauntlets die erforderliche Geometrie zu erhalten.

### BINDER

Das textile Flächengebilde, bevorzugt handelt es sich um ein Vlies und/oder Spinnvlies, wird einer Verfestigung unterzogen, die üblicherweise bereits bei der Herstellung der textilen Flächengebilde erfolgt. Die Verfestigung trägt dazu bei, dass das textile Flächengebilde eine verbesserte mechanische Festigkeit aufweist und besser verarbeitet bzw. veredelt werden kann.

Das textile Flächengebilde, insbesondere das Vlies und/oder Spinnvlies, wird vorzugsweise mittels mindestens eines chemischen oder thermoplastischen Binders verfestigt. Als chemischer Binder werden organische Verbindungen und Substanzen verstanden, welche durch chemische Reaktion, beispielsweise Vernetzung oder Kondensation, aushärten und vorzugsweise noch thermoplastische Eigenschaften aufweisen.

Die chemischen, organischen Binder unterliegen grundsätzlich keiner Beschränkung, so dass alle in der Herstellung von textilen Flächengebilden, vorzugsweise Vliesen, bekannten organischen Binder eingesetzt werden können. Aufgrund des Einsatzes in Stromspeicher-Batterien des Blei-Säure-Typs werden solche Binder eingesetzt deren Beständigkeit in saurer Umgebung ausreichend ist und die zudem weniger als 10ppm (Gewichtsteile) der vorstehend genannten störendenden Schwermetalle aufweisen. Diese Binder sind dem Fachmann bekannt. Vorzugsweise handelt es sich bei den chemischen, organischen Bindern um Binder auf Basis von Butadien-Styrene, Phenol-Formaldehyd, Melamin-Formaldehyd, Harnstoff-Formaldehyd oder Mischungen daraus, formaldehyd-freie Binder, selbstvernetzende oder thermisch indizierte vernetzende Binder, die ohne Zusatz eines Katalysators chemisch vollständig durchreagieren. Die Vernetzung wird vorzugsweise thermisch induziert. Geeignete Binder sind u.a. Acrylat basierende Dispersionsbinder, die thermoplastische Eigenschaften aufweisen.

Insofern das textile Flächengebilde, bevorzugt handelt es sich um ein Vlies und/oder Spinnvlies, mit einem Binder verfestigt ist, wird dem Binder vorzugsweise mindestens ein elektrisch leitfähiges Additiv zugesetzt, so dass ein Additiv-Bindersystem zur Verfestigung eingesetzt wird. Unter dem Begriff "Additiv-Bindersystem" im Sinne der vorliegenden Erfindung ist somit ein Gemisch aus mindestens 70-98 Gew.-% mindestens eines chemischen und / oder thermoplastischen organischen Binders und mindestens 2-30 Gew.-% mindestens eines elektrisch leitfähigen Additivs zu verstehen.

Die Menge an verfestigtem Binder, welcher thermoplastische Eigenschaften aufweist, beträgt zwischen 5 und 50 Gew.-%, bevorzugt zwischen 5 und 40 Gew.-%, besonders bevorzugt zwischen 10-und 25 Gew.-%, wobei sich die Angabe auf das fertig ausgerüstet und vollständig ausgehärtete textile Flächengebilde nach vollständiger Trocknung bezieht. Besonders bevorzugt sind neben dem vorstehend genannten Binder, welcher thermoplastische Eigenschaften aufweist, Binder, die keine thermoplastischen Eigenschaften aufweisen nur in geringer Menge anwesend, d.h. in Mengen von maximal 10 Gew.-% bezogen auf die Gesamt-Bindermenge, insbesondere bevorzugt sind keine Binder, die keine thermoplastischen Eigenschaften aufweisen, anwesend.

Die Menge an elektrisch leitfähigem Additiv beträgt zwischen 1 und 10 Gew.-%, bevorzugt zwischen 2 und 6 Gew.-%, wobei sich die Angabe auf das fertig ausgerüstet und vollständig ausgehärtete textile Flächengebilde nach vollständiger Trocknung bezieht.

Die organischen Binder(n) im Additiv-Bindersystem können als echte Dispersionen, kolloiddisperse oder molekulardisperse Dispersionen, im Allgemeinen jedoch als sogenannte Teildispersionen, d.h. um wässrige Systeme, die zum Teil molekulardispers und zum Teil kolloiddispers sind, vorliegen.

Insofern die organischen Binder(n) im Additiv-Bindersystem als wässrige Polymerdispersion oder Polymerlösung eingesetzt werden soll, beträgt der Feststoffgehalt vorzugsweise zwischen 30 und 70 Gew.-%, insbesondere zwischen 35 und 65 Gew.-%, insbesondere bevorzugt 40 bis 60 Gew.-% (bestimmt gemäß DIN EN ISO 3251:2008).

Insofern die organischen Binder(n) im Additiv-Bindersystem als wässrige Polymerdispersion eingesetzt werden soll, beträgt die Viskosität vorzugsweise 50 bis 20000 mPa*s, insbesondere 100 bis 8000 mPa*s, besonders bevorzugt 900 bis 4000 mPa*s (bestimmt gemäß EN ISO 2555:1999).

Insofern die organischen Binder(n) im Additiv-Bindersystem als wässrige Polymerdispersion eingesetzt werden soll, beträgt der pH-Wert (gemessen als 10 Gew.-%-ige Lösung in Wasser) zwischen 1,5 und 10, bevorzugt zwischen 4 und 9 (bestimmt gemäß ISO 976:2013-12).

Insofern das textile Flächengebilde, insbesondere das Vlies und/oder Spinnvlies, in Form eines schmelzbinderverfestigten Spinnvlies oder eines schmelzbinderverfestigten Vlies vorliegen, kann auf den Einsatz von chemischen bzw. thermoplastischen Bindern ganz oder teilweise verzichtet werden. Bei dieser Ausführungsform der Erfindung wird das elektrisch leitfähige Additiv mittels einer Tränk- bzw. Beschichtungsmasse in das schmelzbinderverfestigte Vlies bzw. Spinnvlies auf- bzw. eingebracht.

Unter dem Begriff "Tränk- bzw. Beschichtungsmasse" im Sinne der vorliegenden Erfindung ist somit ein Gemisch aus mindestens 10 Gew.-% mindestens eines chemischen, organischen Binders und mindestens 2 Gew.-% mindestens eines elektrisch leitfähigen Additivs zu verstehen, mit welchem das elektrisch leitfähige Additiv in das schmelzbinderverfestigte Vlies bzw. Spinnvlies auf- bzw. eingebracht wird.

Als chemische oder thermoplastische, organische Binder für die Tränk- bzw. Beschichtungsmasse sind die unter dem Begriff Additiv-Bindersystem subsummierten Binder zu verstehen, die gleichermaßen geeignet sind.

Die Menge an verfestigtem Binder, welcher thermoplastische Eigenschaften aufweist, beträgt zwischen 5 und 50 Gew.-%, bevorzugt zwischen 5 und 40 Gew.-%, besonders bevorzugt zwischen 10-und 25 Gew.-%, wobei sich die Angabe auf das fertig ausgerüstet und vollständig ausgehärtete textile Flächengebilde nach vollständiger Trocknung bezieht. Besonders bevorzugt sind neben dem vorstehend genannten Binder, welcher thermoplastische Eigenschaften aufweist, Binder, die keine thermoplastischen Eigenschaften aufweisen nur in geringer Menge anwesend, d.h. in Mengen von maximal 10 Gew.-% bezogen auf die Gesamt-Bindermenge, insbesondere bevorzugt sind keine Binder, die keine thermoplastischen Eigenschaften aufweisen, anwesend.

Die Menge an elektrisch leitfähigem Additiv beträgt zwischen 1 und 10 Gew.-%, bevorzugt zwischen 2 und 6 Gew.-%, wobei sich die Angabe auf das fertig ausgerüstet und vollständig ausgehärtete textile Flächengebilde nach vollständiger Trocknung bezieht.

Die organischen Binder können als echte Dispersionen, kolloiddisperse oder molekulardisperse Dispersionen, im Allgemeinen jedoch als sogenannte Teildispersionen, d.h. um wässrige Systeme, die zum Teil molekulardispers und zum Teil kolloiddispers sind, vorliegen.

Insofern die organischen Binder als wässrige Polymerdispersion oder Polymerlösung eingesetzt werden soll, beträgt der Feststoffgehalt vorzugsweise zwischen 30 und 70 Gew.-%, insbesondere zwischen 35 und 65 Gew.-%, insbesondere bevorzugt 40 bis 60 Gew.-% (bestimmt gemäß DIN EN ISO 3251:2008).

Insofern die organischen Binder als wässrige Polymerdispersion eingesetzt werden soll, beträgt die Viskosität vorzugsweise 50 bis 20000 mPa*s, insbesondere 100 bis 8000 mPa*s, besonders bevorzugt 900 bis 4000 mPa*s (bestimmt gemäß EN ISO 2555:1999).

Insofern die organischen Binder als wässrige Polymerdispersion eingesetzt werden soll, beträgt der pH-Wert (gemessen als 10 Gew.-%-ige Lösung in Wasser) zwischen 1,5 und 10, bevorzugt zwischen 4 und 9 (bestimmt gemäß ISO 976:2013-12).

### ELEKTRISCH LEITFÄHIGE ADDITIVE

Die elektrisch leitfähigen Additive unterliegen grundsätzlich keiner Beschränkung, so dass alle Additive mit einer elektrischen Leitfähigkeit eingesetzt werden.

Die elektrisch leitfähigen Additive bewirken, dass der Oberflächenwiderstand der mit dem Additiv ausgerüsteten textilen Flächengebilde, auf einen Wert von 10³ Ohm und weniger absinkt. Der Oberflächenwiderstand wird gemäß DIN 54345-1:1992-02 bestimmt.

Die elektrisch leitfähigen Additive bewirken, dass der spez. Durchgangswiderstand der mit dem Additiv ausgerüsteten textilen Flächengebilde, auf einen Wert von 10⁴ Ohm*cm und weniger absinkt. Der spez. Durchgangswiderstand wird gemäß DIN 54345-1:1992-02 bestimmt.

Aufgrund des Einsatzes in Stromspeicher-Batterien des Blei-Säure-Typs werden solche elektrisch leitfähigen Additive eingesetzt deren Beständigkeit in saurer Umgebung ausreichend ist. Als geeignete elektrisch leitfähige Additive werden vorzugsweise elektrisch leitfähige partikelförmige Materialien auf Basis von Kohlenstoff, vorzugsweise Ruß, insbesondere Acetylen-Ruß, Graphit, Nano-Graphit (Graphene) oder elektrisch leitfähige faserförmige Materialien auf Basis von Kohlenstoff, carbonisiertem Kohlenstoff, insbesondere Graphit, Nano-Graphit oder elektrisch leitfähige Alkohole.

Geeignete kohlenstoffhaltige und elektrisch leitfähige Additive sind kommerziell erhältlich. Beispiele sind "Carbofin leitfähig L" bzw. "Carbofin L" der Firma Rockwood, oder auch ähnliche Produkte anderer Hersteller.

Das erfindungsgemäß eingesetzte Additiv-Bindersystem bzw. die Tränk-/Beschichtungsmasse kann noch bis zu 10 Gew.-% Additive enthalten, wobei diese keine elektrisch leitfähige Additive sind. Hierbei handelt es sich um handelsübliche Zusätze wie Konservierungsmittel, Stabilisatoren, Anti-Oxidantien, Entschäumer, Hydrophilierungsmittel, UV-Stabilisatoren, Füllstoffe und/oder Pigmente. Diese sind zum Teil in den Handelsprodukten enthalten und dienen der Lager- und Transport-Stabilisierung oder können auch nachträglich zugesetzt werden um die kundenseitigen Spezifikationen zu erfüllen.

Die elektrisch leitfähigen Additive werden dem organischen Binder des Additiv-Bindersystem bzw. der Tränk-/Beschichtungsmasse zugesetzt und gemeinsam auf das textile Flächengebilde aufgebracht. Der Auftrag kann zu einer vollständigen Durchdringung und Tränkung des textilen Flächengebildes oder zu einer ein oder beidseitigen Beschichtung des textilen Flächengebildes führen. Anschließend wird der chemische organische Binder durch chemische Reaktion gehärtet und etwaige vorhandene flüchtige Substanzen, z.B. Wasser, durch Trocknung entfernt.

Das mit verfestigtem Binder und elektrisch leitfähigem Additiv ausgerüstete textile Flächengebilde besitzt vorzugsweise eine Luftdurchlässigkeit zwischen 10.000 und 500 l/m² sec @ 200Pa gemessen gemäß EN-ISO 9237:1995-12.

Das mit verfestigtem Binder und elektrisch leitfähigem Additiv ausgerüstete textile Flächengebilde besitzt vorzugsweise eine Höchstzugkraft (in Längsrichtung) von mindestens 150 N/5 cm, besonders bevorzugt mindestens 200 N/5 cm gemessen gemäß DIN EN 29073-3:1992-8.

Das mit verfestigtem Binder und elektrisch leitfähigem Additiv ausgerüstete textile Flächengebilde besitzt vorzugsweise eine Höchstzugkraft (in Querrichtung) von mindestens 100 N/5 cm, besonders bevorzugt mindestens 150 N/5 cm gemessen gemäß DIN EN 29073-3:1992-8.

Der Berstdruck B1 des mit verfestigtem Binder und elektrisch leitfähigem Additiv ausgerüsteten textilen Flächengebildes beträgt mindestens 800kPa. Der Berstdruck ist ein Maß für die mechanische Stabilität der Gauntlets, die insbesondere während deren Herstellung und dem Betrieb von großer Bedeutung ist. Der Berstdruck wird üblicherweise mittels einer expandierbaren Gummihülse, die in die Röhrchentaschen eingeführt und mittels Druckluft beaufschlagt wird, bestimmt. Die Änderung des Durchmessers der Gauntlet-Röhre bei Anlegen des Druckes B1 beträgt weniger als 2% bezogen auf den Ausgangsdurchmesser des Gauntlets. Durch weitere Erhöhung des Innendrucks in der Gummihülse bis zum Bersten der Röhrchentasche erfolgt die Bestimmung des Berstdrucks B2. Der Berstdruck B2 des mit verfestigtem Binder und elektrisch leitfähigem Additiv ausgerüsteten textilen Flächengebildes beträgt mindestens 2200kPa.

Das mit verfestigtem Binder und elektrisch leitfähigem Additiv ausgerüstete textile Flächengebilde besitzt vorzugsweise eine Weiterreißfestigkeit (in Längsrichtung) von mindestens 3 daN, besonders bevorzugt mindestens 5 daN gemessen gemäß DIN EN ISO 9073-4:1997

Das mit verfestigtem Binder und elektrisch leitfähigem Additiv ausgerüstete textile Flächengebilde besitzt vorzugsweise eine Weiterreißfestigkeit (in Querrichtung) von mindestens 3 daN, besonders bevorzugt mindestens 5 daN gemessen gemäß DIN EN ISO 9073-4:1997

Das erfindungsgemäß eingesetzte textile Flächengebilde besitzt einen Thermoschrumpf von >0,1%, bevorzugt >0,5% bei 160°C (Heißluft).

Das erfindungsgemäß eingesetzte textile Flächengebilde besitzt weiterhin eine geringe Haarigkeit der Vliesoberfläche.

Besonders bevorzugt wird ein textiles Flächengebilde eingesetzt, welches eine Kombination der vorstehend genannten Parameter aus Luftdurchlässigkeit, Höchstzugkraft (in Längs- und/oder Querrichtung) und Weiterreißfestigkeit aufweist. Insbesondere bevorzugt wird ein textiles Flächengebilde eingesetzt, welches eine Kombination der vorstehend genannten Parameter aus Luftdurchlässigkeit, Höchstzugkraft (in Längs- und/oder Querrichtung), und Weiterreißfestigkeit (in Längs- und/oder Querrichtung) aufweist.

Ein einer weiteren Ausführungsform der Erfindung werden die elektrisch leitfähigen Additive dem Polymermaterial zugesetzt, welches die Fasern des textilen Flächengebildes bildet. Die Zugabe von Additiven beim Schmelzspinnen von synthetischen, thermoplastischen Polymeren ist dem Fachmann bekannt, diese erfolgt beispielsweise durch Zugabe des elektrisch leitfähigen Additivs zum Polymer im Schmelzextruder oder über eine Masterbatch-Dosierung. Die Menge an elektrisch leitfähigem Additiv beträgt, bezogen auf das Gesamtgewicht des textilen Flächengebildes zwischen 1% und 30% (Gewichtsprozent).

### HERSTELLUNG

Die Herstellung der erfindungsgemäß eingesetzten textilen Flächengebilde sowie die Ausrüstung mit dem Additiv-Bindersystem bzw. der Tränk-/Beschichtungsmasse erfolgt mittels an sich bekannter Methoden und Verfahren.

Die Herstellung des erfindungsgemäßen eingesetzten textilen Flächengebildes mit dem Additiv-Bindersystem erfolgt durch folgende Maßnahmen:
A) Bildung eines vorstehend beschriebenen textilen Flächengebildes und ggf. mechanische und/oder thermische Verfestigung des selbigen,
B) Aufbringen des vorstehend beschriebenen Additiv-Bindersystem bzw. der vorstehend beschriebenen Tränk-/Beschichtungsmasse
C) Trocknen und Verfestigung des Binders aus dem Additiv-Bindersystem bzw. der Tränk-/Beschichtungsmasse.

Die Bildung des textilen Flächengebildes erfolgt mittels bekannter Maßnahmen.

Die Durchführung der ggf. erfolgenden mechanischen Verfestigung erfolgt ebenfalls mittels im Grundsatz bekannter Methoden.

Bevorzugt wird das Vlies bzw. Spinnvlies mittels mechanischer Vernadelung und / oder Kalandrierung verfestigt.

Bevorzugt erfolgt eine thermische Kalandrierung bei einer Temperatur von 120 - 160°C Kalandertemperatur. Die Prägung des Kalanders kann dabei eine Struktur aufweisen, z. B. eine rautenförmige, Punkt- oder Stäbchenstruktur besitzen oder glatt sein. Neben der Verfestigung des Vlieses dient die thermische Kalandierung auch der Reduktion der sogenannten Haarigkeit der Vliesoberfläche, die die Verwendung des Vlieses für die beabsichtigte Anwendbarkeit erheblich beeinträchtigen würde. Anschließend erfolgt die Tränkung des Vlieses bzw. Spinnvliese mit dem Additiv-Bindersystem bzw. der Tränk-/Beschichtungsmasse. Der Einbau der gegebenenfalls vorhandenen Verstärkung erfolgt während oder nach der Bildung des textilen Flächengebildes bzw. vor oder während dem Auftragen des Additiv-Bindersystems bzw. der Tränk-/Beschichtungsmasse. Die Zuführung der Verstärkung und ggf. jede weitere thermische Behandlung im Herstellverfahren erfolgt vorzugsweise unter Spannung, insbesondere unter Längsspannung.

Alternative wird das Vlies bzw. Spinnvlies mittels mechanischer Vernadelung beziehungsweise hydrodynamischer Vernadelung verfestigt. In diesem Falle wird dabei die Vernadelung so gesteuert wird, dass eine Vernadelungsdichte von 10-100 Stiche/cm² erreicht wird. Insbesondere wird eine Vernadelungsdichte von 30-50 Stiche/cm² bevorzugt. Eine erhöhte Lochdichte verbessert den Ionentransport durch das Vlies, ohne jedoch die mechanische Festigkeit des Vlieses zu beinträchtigen.

Die Verfestigung des Vlieses kann auch mittels der beschriebenen Vernadelung mit anschließender Kalandrierung erfolgen.

Die Zuführung von gegebenenfalls einzubauenden weiteren textilen Flächengebilden erfolgt vor oder während der Verfestigung des Additiv-Bindersystem bzw. der Tränk-/Beschichtungsmasse.

Die Auftragsmengen und sonstige Beschaffenheit des Additiv-Bindersystem bzw. der Tränk-/Beschichtungsmasse wurde bereits Eingangs detailliert beschrieben und ist auch für das Verfahren gültig. Der Auftrag erfolgt ebenfalls mittels bekannter Methoden.

Die Trocknung bzw. Verfestigung des Binders erfolgt ebenfalls mittels dem Fachmann bekannter Methoden, wobei sich Temperaturen von 120°C bis 250°C, bevorzugt 140-160°C, als vorteilhaft erweisen. Die Trocknung bzw. thermische Behandlung bewirkt u.a. eine chemische Reaktion des Binders und führt zu dessen Aushärtung. Die Trocknung erfolgt, wie jede thermische Behandlung im Herstellverfahren, vorzugsweise unter Spannung, insbesondere unter Längsspannung.

Falls das textile Flächengebilde keinen Binder enthält, erfolgt der Auftrag des Additiv-Bindersystem bzw. der Tränk-/Beschichtungsmasse auf das mechanisch und / oder thermische verfestigten Vlieses mittels bekannter Auftragsmethoden.

In einer weiteren Ausgestaltung der Erfindung werden die elektrisch leitfähigen Additive, wie bereits beschrieben, als Masterbatches oder Compound direkt in das Faserpolymer beim Faser-Spinnprozess eingebracht. Sowohl die Filamente oder Stapelfaserpolymere können leitfähige Additive enthalten als auch die Schmelzpolymere bei thermisch verfestigten Vliesen. Insofern die Fasern als Bikomponten-Fasern vorliegen kann die Dosierung bzw. Zugabe der elektrisch leitfähigen Additive auch nur in das Mantelmaterial einer Bikomponten-Faser des Kern-Mantel Typs erfolgen.

Die Herstellung der erfindungsgemäßen röhrenförmige Taschen vom Patronengurttyp aus den mit Additiv-Bindersystem bzw. der Tränk-/Beschichtungsmasse ausgerüsteten textilen Flächengebilden erfolgt durch bekannte Maßnahmen, z.B. wie in WO 2007/090893 beschrieben.

Im Standardverfahren werden dabei zwei textile Flächengebilde, insbesondere Vliese und/oder Spinnvliese, übereinander gelegt und miteinander vernäht. Die Nähte verlaufen parallel und im Abstand von einigen mm bis cm voneinander. Danach werden Stifte zwischen die Lagen eingeführt und aufgeheizt oder heiße Stifte zwischen die Lagen eingeführt, die die Bereiche zwischen den Nähten zu Röhren mit kreisförmigem (oder auch eckigem) Querschnitt verformen. Die textile Fläche, einschließlich des Binders, muss daher thermoplastische Eigenschaften aufweisen, damit die röhrenförmige Struktur nach dem Abkühlen formbeständig erhalten bleibt. Die Temperatur in diesem Prozess liegt im Bereich 130-180 °C. Der bei dieser Temperatur einsetzende Thermoschrumpf der textilen Flächengebilde führt dazu, dass bei der Formung der Röhrchentaschen das textile Flächengebilde passgenau auf die beheizten Stifte schrumpft. Die genaue Geometrie der Taschen wird somit durch die eingeführten Stifte bestimmt. Unter dem Begriff "röhrenförmig" im Sinne der Erfindung werden somit nicht nur zylindrische Taschen verstanden, die durch Stifte mit zylindrischer Form, d.h. kreisförmigem Querschnitt, erzeugt werden, sondern auch eckige, nicht-zylindrische Taschen, die durch Stifte mit nicht-zylindrischer Form, d.h. mehr-eckigem Querschnitt (Anzahl der Ecken ist größer gleich 3) erzeugt werden.

Für den Einsatz in Blei-Säure Batterien werden die erfindungsgemäßen röhrenförmigen Taschen vom Patronengurttyp mit einer aktiven Bleipaste gefüllt. Die gefüllten Röhrchen bilden, in Reihen angeordnet, die positive Elektrode der Bleisäurebatterie. Üblicherweise befindet sich zwischen Röhrchentaschenelektrode und der Gegenelektrode ein poröser Separator, z.B. ein PE- oder Glasfaservlies oder eine poröse Polymermembran.

Die einzelnen Verfahrens-Maßnahmen sind für sich alleine genommen bekannt, jedoch in der erfindungsgemäßen Kombination bzw. Reihenfolge und dem Einsatz des erfindungsgemäßen Additiv-Bindersystems bzw. der Tränk-/Beschichtungsmasse patentfähig.

### Messmethoden:

### Allgemeine Messmethoden:

### Luftdurchlässigkeit:

Die Luftdurchlässigkeit wird gemäß DIN EN ISO 9237:1995-12 bestimmt.

### Flächengewicht:

Das Flächengewicht wird gemäß DIN EN 29073-1:1992-08 bestimmt.

### Messung Faserdurchmesser:

Der Faserdurchmesser wird gemäß DIN EN ISO 1973:1995-12 bestimmt.

### Messung Bezugskraft:

Die Messung der Bezugskraft erfolgt nach EN 29073-3:1992-08, an 5 cm breiten Proben bei 200mm Einspannlänge. Der Zahlenwert der Vorspannkraft, angegeben in Centinewton (cN) entspricht dabei dem Zahlenwert der Flächenmasse der Probe, angegeben in Gramm pro Quadratmeter.

### Messung des Oberflächenwiderstandes:

Der Oberflächenwiderstand wird gemäß DIN 54345-1:1992-02 bestimmt

Messung des spez. Durchgangswiderstandes:
Der Durchgangswiderstand wird gemäß DIN 54345-1:1992-02 bestimmt.

### Berstdruck

Der Berstdruck wird bestimmt, indem ein Gauntlet aus der Probe herausgeschnitten wird, wobei die benachbarten, längs verlaufenden Gauntlets mittig durchtrennt werden. Eine einseitig geschlossene Gummiröhre mit einem Berstdruck von 3 bar, einer Wandstärke von 1,5 mm und einem geringfügig kleineren äußeren Durchmesser als das Gauntlet wird in die Gauntlet Röhre eingeführt. Anschließend wird der Druck in der Röhre mittels Druckluft langsam auf 8 bar erhöht und für eine Minute gehalten und die Änderung des Gauntlet-Durchmessers bestimmt. Anschließend wird der Druck auf den angestrebten Messwert erhöht und für eine Minute gehalten, ohne dass die Gauntlet-Röhre bei diesem Druck birst.

## Patentansprüche

1. Röhrenförmige Taschen vom Patronengurttyp für Blei-Säure Batterien aus einem textilen Flächengebilde, **dadurch gekennzeichnet, dass** das textile Flächengebilde, welches die röhrenförmigen Taschen bildet, mit mindestens einem verfestigten Binder mit thermoplastischen Eigenschaften und mit mindestens einem elektrisch leitfähigen Additiv ausgerüstet ist.

2. Röhrenförmige Taschen vom Patronengurttyp gemäß Anspruch 1, **dadurch gekennzeichnet, dass** das textile Flächengebilde ein Vlies, vorzugsweise aus synthetischen Polymerfasern, Mineralfasern, Glasfasern oder Mischungen derselben, ist.

3. Röhrenförmige Taschen vom Patronengurttyp gemäß Anspruch 2, **dadurch gekennzeichnet, dass** das Vlies Stapelfasern, Schnittfasern oder Reißfasern umfasst, vorzugsweise Fasern aus schmelzspinnbaren synthetischen Polymermaterialien, Mineralfasern, Glasfasern oder Mischungen derselben.

4. Röhrenförmige Taschen vom Patronengurttyp gemäß Anspruch 1, 2 oder 3, **dadurch gekennzeichnet, dass** das textile Flächengebilde ein Flächengewicht zwischen 20 und 500 g/m², vorzugsweise zwischen 40 und 250 g/m², aufweist.

5. Röhrenförmige Taschen vom Patronengurttyp gemäß Anspruch 1 bis 4, **dadurch gekennzeichnet, dass** das textile Flächengebilde weniger als 10ppm (Gewichtsteile) an Schwermetallen enthält.

6. Röhrenförmige Taschen vom Patronengurttyp gemäß Anspruch 1 bis 5, **dadurch gekennzeichnet, dass** das textile Flächengebilde einen Thermoschrumpf von > 0,1% (Heißluft 160°C, 10 min) aufweist.

7. Röhrenförmige Taschen vom Patronengurttyp gemäß Anspruch 1 bis 6, **dadurch gekennzeichnet, dass** die Menge an elektrisch leitfähigem Additiv zwischen 1% und 30 Gew.-% (Gewichtsprozent), bezogen auf das Gesamtgewicht des textilen Flächengebildes, beträgt.

8. Röhrenförmige Taschen vom Patronengurttyp gemäß Anspruch 1 bis 7, **dadurch gekennzeichnet, dass** der Oberflächenwiderstand der mit dem Additiv ausgerüsteten textilen Flächengebilde 10³ Ohm oder weniger beträgt.

9. Röhrenförmige Taschen vom Patronengurttyp gemäß Anspruch 1 bis 8, **dadurch gekennzeichnet, dass** der spez. Durchgangswiderstand der mit dem Additiv ausgerüsteten textilen Flächengebilde 10⁴ Ohm*cm oder weniger beträgt.

10. Röhrenförmige Taschen vom Patronengurttyp gemäß Anspruch 1 bis 9, **dadurch gekennzeichnet, dass** das elektrisch leitfähige Additiv ein elektrisch leitfähiges partikelförmiges Materialien auf Basis von Kohlenstoff, vorzugsweise Ruß, insbesondere Acetylen-Ruß, Graphit, Nano-Graphit (Graphene) oder ein elektrisch leitfähiges faserförmiges Materialien auf Basis von Kohlenstoff, carbonisiertem Kohlenstoff, insbesondere Graphit, Nano-Graphit oder elektrisch leitfähiger Alkohol, ist.

11. Röhrenförmige Taschen vom Patronengurttyp gemäß Anspruch 1 bis 10, **dadurch gekennzeichnet, dass** das elektrisch leitfähige Additiv mit einem Binder als Additiv-Bindersystem oder Tränk-/Beschichtungsmasse aufgebracht wird.

12. Röhrenförmige Taschen vom Patronengurttyp gemäß Anspruch 1 bis 11, **dadurch gekennzeichnet, dass** das textile Flächengebilde, insbesondere das Vlies und/oder Spinnvlies, mittels mindestens eines chemischen und/oder thermoplastischen Binders verfestigt ist, der vorzugsweise noch thermoplastische Eigenschaften aufweist.

13. Röhrenförmige Taschen vom Patronengurttyp gemäß Anspruch 1 bis 12, **dadurch gekennzeichnet, dass** das textile Flächengebilde, insbesondere das Vlies und/oder Spinnvlies, zwischen 5 und 50 Gew.-% Binder, bevorzugt zwischen 5-und 50 Gew.-% Binder, besonders bevorzugt zwischen 10-und 25 Gew.-% Binder, enthält.

14. Röhrenförmige Taschen vom Patronengurttyp gemäß Anspruch 1 bis 13, **dadurch gekennzeichnet, dass** neben dem Binder, welcher thermoplastische Eigenschaften aufweist, Binder, die keine thermoplastischen Eigenschaften aufweisen nur in Mengen von maximal 10 Gew.-% bezogen auf die Gesamt-Bindermenge anwesend sind, vorzugsweise sind keine Binder, die keine thermoplastischen Eigenschaften aufweisen, anwesend.

15. Röhrenförmige Taschen vom Patronengurttyp gemäß Anspruch 1 bis 14, **dadurch gekennzeichnet, dass** das mit verfestigtem Binder und elektrisch leitfähigem Additiv ausgerüstete textile Flächengebilde eine Luftdurchlässigkeit zwischen 10.000 und 500 l/m² sec @ 200Pa aufweist.

16. Röhrenförmige Taschen vom Patronengurttyp gemäß Anspruch 1 bis 15, **dadurch gekennzeichnet, dass** das mit verfestigtem Binder und elektrisch leitfähigem Additiv ausgerüstete textile Flächengebilde eine Höchstzugkraft (in Längsrichtung) von mindestens 150 N/5 cm, bevorzugt mindestens 200 N/5 cm, aufweist.

17. Röhrenförmige Taschen vom Patronengurttyp gemäß Anspruch 1 bis 16, **dadurch gekennzeichnet, dass** das mit verfestigtem Binder und elektrisch leitfähigem Additiv ausgerüstete textile Flächengebilde eine Höchstzugkraft (in Querrichtung) von mindestens 100 N/5 cm, besonders bevorzugt mindestens 150 N/5 cm, aufweist.

18. Röhrenförmige Taschen vom Patronengurttyp gemäß Anspruch 1 bis 17, **dadurch gekennzeichnet, dass** das mit verfestigtem Binder und elektrisch leitfähigem Additiv ausgerüstete textile Flächengebilde eine Weiterreißfestigkeit (in Längsrichtung) von mindestens 3 daN, bevorzugt mindestens 5 daN, aufweist.

19. Röhrenförmige Taschen vom Patronengurttyp gemäß Anspruch 1 bis 18, **dadurch gekennzeichnet, dass** das mit verfestigtem Binder und elektrisch leitfähigem Additiv ausgerüstete textile Flächengebilde eine Weiterreißfestigkeit (in Querrichtung) von mindestens 3 daN, bevorzugt mindestens 5 daN, aufweist.

20. Röhrenförmige Taschen vom Patronengurttyp gemäß Anspruch 1 bis 19, **dadurch gekennzeichnet, dass** das mit verfestigtem Binder und elektrisch leitfähigem Additiv ausgerüstete textile Flächengebilde einen Berstdruck von min 800kPa aufweist.

21. Röhrenförmige Taschen vom Patronengurttyp gemäß Anspruch 1 bis 20, **dadurch gekennzeichnet, dass** die Tasche mit einer aktiven Bleipaste gefüllt ist.

22. Stromspeicherbatterien des Blei-Säure-Typs mit Elektroden, **dadurch gekennzeichnet, dass** zumindest die positiven Elektroden aus röhrenförmigen Taschen vom Patronengurttyp gemäß mindestens einem der Ansprüche 1 bis 20 gebildet werden und die röhrenförmigen Taschen mit einer aktiven Bleipaste gefüllt sind.

23. Stromspeicherbatterien gemäß Anspruch 22, **dadurch gekennzeichnet, dass** die positiven Elektroden noch einen weiteren Separator aufweisen, der die positive Röhrchentaschenelektroden und die Gegenelektrode voneinander trennt.

## Claims

1. Tubular bags of the cartridge belt type for lead-acid batteries composed of a textile fabric, **characterized in that** the textile fabric, which forms the tubular bags, is equipped with at least one consolidated binder with thermoplastic properties and at least one electrically conductive additive.

2. The tubular bags of the cartridge belt type according to claim 1, **characterized in that** the textile fabric is a non-woven fabric, preferably composed of synthetic polymer fibers, mineral fibers, glass fibers or mixtures thereof.

3. The tubular bags of the cartridge belt type according to claim 2, **characterized in that** the non-woven fabric comprises staple fibers, chopped fibers or tearing fibers, preferably fibers composed of melt-spinnable synthetic polymer materials, mineral fibers, glass fibers or mixtures thereof.

4. The tubular bags of the cartridge belt type according to claim 1, 2 or 3, **characterized in that** the textile fabric has a weight per unit area of between 20 and 500 g/m², preferably between 40 and 250 g/m².

5. The tubular bags of the cartridge belt type according to claim 1 to 4, **characterized in that** the textile fabric contains less than 10 ppm (parts by weight) of heavy metals.

6. The tubular bags of the cartridge belt type according to claim 1 to 5, **characterized in that** the textile fabric has a heat shrinkage > 0.1% (hot air 160°C, 10 min).

7. The tubular bags of the cartridge belt type according to claim 1 to 6, **characterized in that** the quantity of electrically conductive additive is between 1% and 30% by weight (weight percent), each with reference to the total weight of the textile fabric.

8. The tubular bags of the cartridge belt type according to claim 1 to 7, **characterized in that** the surface resistance of the textile fabric equipped with the additive is 10³ Ohm or less.

9. The tubular bags of the cartridge belt type according to claim 1 to 8, **characterized in that** the specific contact resistance of the textile fabric equipped with the additive is 10⁴ Ohm*cm or less.

10. The tubular bags of the cartridge belt type according to claim 1 to 9, **characterized in that** the electrically conductive additive is an electrically conductive particle-shaped material based on carbon, preferably carbon black, in particular acetylene black, graphite, nano-graphite (graphene) or an electrically conductive fiber-shaped material based on carbon, carbonized carbon, in particular graphite, nano-graphite or electrically conductive alcohol.

11. The tubular bags of the cartridge belt type according to claim 1 to 10, **characterized in that** the electrically conductive additive is applied with a binder as additive-binder system or impregnating/coating compound.

12. The tubular bags of the cartridge belt type according to claim 1 to 11, **characterized in that** the textile fabric, in particular the non-woven fabric and/or spunbonded non-woven fabric, is consolidated by means of at least one chemical and/or thermoplastic binder, which preferably also has thermoplastic properties.

13. The tubular bags of the cartridge belt type according to claim 1 to 12, **characterized in that** the textile fabric, in particular the non-woven fabric and/or spunbonded non-woven fabric, contains between 5 and 50% by weight of binder, preferably between 5 and 50% by weight of binder, particularly preferred between 10 and 25% by weight of binder.

14. The tubular bags of the cartridge belt type according to claim 1 to 13, **characterized in that** in addition to the binder, which has thermoplastic properties, binders, which have no thermoplastic properties are available only in amounts of up to 10% by weight with reference to the whole binder quantity; preferably, no binders, which have no thermoplastic properties, are present.

15. The tubular bags of the cartridge belt type according to claim 1 to 14, **characterized in that** the textile fabric equipped with the consolidated binder and electrically conductive additive has an air permeability between 10,000 and 500 l/m² sec @ 200 Pa.

16. The tubular bags of the cartridge belt type according to claim 1 to 15, **characterized in that** the textile fabric equipped with the consolidated binder and electrically conductive additive has a maximum tractive force (in the longitudinal direction) of at least 150 N/5 cm, preferably at least 200 N/5 cm.

17. The tubular bags of the cartridge belt type according to claim 1 to 16, **characterized in that** the textile fabric equipped with the consolidated binder and electrically conductive additive has a maximum tractive force (in the transverse direction) of at least 100 N/5 cm, particularly preferred at least 150 N/5 cm.

18. The tubular bags of the cartridge belt type according to claim 1 to 17, **characterized in that** the textile fabric equipped with the consolidated binder and electrically conductive additive has a further tear strength (in the longitudinal direction) of at least 3 daN, preferably at least 5 daN.

19. The tubular bags of the cartridge belt type according to claim 1 to 18, **characterized in that** the textile fabric equipped with the consolidated binder and electrically conductive additive has a further tear strength (in the transverse direction) of at least 3 daN, preferably at least 5 daN.

20. The tubular bags of the cartridge belt type according to claim 1 to 19, **characterized in that** the textile fabric equipped with the consolidated binder and electrically conductive additive has a burst pressure of at least 800 kPa.

21. The tubular bags of the cartridge belt type according to claim 1 to 20, **characterized in that** the bag is filled with an active lead paste.

22. Power storage batteries of the lead-acid type with electrodes, **characterized in that** at least the positive electrodes are formed by tubular bags of the cartridge belt type according to at least one of the claims 1 to 20 and the tubular bags are filled with an active lead paste.

23. The power storage batteries according to claim 22, **characterized in that** the positive electrodes additionally have a further separator, which separates the positive tube bag electrodes and the counter-electrode from one another.

## Revendications

1. Poches tubulaires du type bande à cartouches pour batteries au plomb-acide en une structure textile plate, **caractérisées en ce que** la structure textile plate, laquelle forme les poches tubulaires, est dotée d'au moins un liant solidifié avec des propriétés thermoplastiques et d'au moins un additif électroconducteur.

2. Poches tubulaires du type bande à cartouches selon la revendication 1, **caractérisées en ce que** la structure textile plate est un non-tissé, de préférence en fibres synthétiques polymères, fibres minérales, fibres de verre ou des mélanges de celles-ci.

3. Poches tubulaires du type bande à cartouches selon la revendication 2, **caractérisées en ce que** le non-tissé comprend des fibres discontinues, des fibres découpées ou des fibres effilochées, de préférence des fibres en matières polymères synthétiques pouvant être filées à chaud, des fibres minérales, des fibres de verre ou des mélanges de celles-ci.

4. Poches tubulaires du type bande à cartouches selon la revendication 1, 2 ou 3, **caractérisées en ce que** la structure textile plate présente une masse au mètre carré entre 20 et 500 g/m², de préférence entre 40 et 250 g/m².

5. Poches tubulaires du type bande à cartouches selon les revendications 1 à 4, **caractérisées en ce que** la structure textile plate contient moins de 10ppm (parties en poids) de métaux lourds.

6. Poches tubulaires du type bande à cartouches selon les revendications 1 à 5, **caractérisées en ce que** la structure textile plate présente un retrait thermique > 0,1% (air chaud 160°C, 10 min).

7. Poches tubulaires du type bande à cartouches selon les revendications 1 à 6, **caractérisées en ce que** la quantité d'additif électroconducteur est comprise entre 1% et 30% en poids (pourcentage en poids) compte tenu du poids total de la structure textile plate.

8. Poches tubulaires du type bande à cartouches selon les revendications 1 à 7, **caractérisées en ce que** la résistance superficielle de la structure textile plate dotée de l'additif est de 10³ ohms ou moins.

9. Poches tubulaires du type bande à cartouches selon les revendications 1 à 8, **caractérisées en ce que** la résistance transversale spéc. de la structure textile plate dotée de l'additif est de 10⁴ ohms*cm ou moins.

10. Poches tubulaires du type bande à cartouches selon les revendications 1 à 9, **caractérisées en ce que** l'additif électroconducteur est un matériau électroconducteur en forme de particules à base de carbone, de préférence du noir de carbone, en particulier du noir d'acétylène, du graphite, du nano-graphite (graphène) ou un matériau fibreux électroconducteur à base de carbone, de carbone carbonisé, en particulier de graphite, de nano-graphite ou d'alcool conducteur.

11. Poches tubulaires du type bande à cartouches selon les revendications 1 à 10, **caractérisées en ce que** l'additif électroconducteur est appliqué avec un liant en tant que système liant d'additif ou masse d'imprégnation/revêtement.

12. Poches tubulaires du type bande à cartouches selon les revendications 1 à 11, **caractérisées en ce que** la structure textile plate, en particulier le non-tissé et/ou non-tissé filé est solidifié au moyen d'au moins un liant chimique et/ou thermoplastique, lequel présente de préférence encore des propriétés thermoplastiques.

13. Poches tubulaires du type bande à cartouches selon les revendications 1 à 12, **caractérisées en ce que** la structure textile plate, en particulier le non-tissé et/ou le non-tissé filé contient entre 5 et 50% en poids de liant, de préférence entre 5 et 50% en poids de liant, de manière particulièrement préférée, entre 10 et 25% en poids de liant.

14. Poches tubulaires du type bande à cartouches selon les revendications 1 à 13, **caractérisées en ce qu'**en plus du liant, lequel présente des propriétés thermoplastiques, il y a des liants qui ne présentent pas de propriétés thermoplastiques seulement en quantités d'un maximum de 10% en poids compte tenu de la quantité globale de liant, de préférence aucun liant ne présentant pas de propriétés thermoplastiques n'étant présent.

15. Poches tubulaires du type bande à cartouches selon les revendications 1 à 14, **caractérisées en ce que** la structure textile plate dotée d'un liant solidifié et d'un additif électroconducteur présente une perméabilité à l'air comprise entre 10 000 et 500 l/m² sec @ 200Pa.

16. Poches tubulaires du type bande à cartouches selon les revendications 1 à 15, **caractérisées en ce que** la structure textile plate dotée d'un liant solidifié et d'un additif électroconducteur présente une force de traction maximale (dans le sens de la longueur) d'au moins 150 N/5 cm, de préférence d'au moins 200 N/5 cm.

17. Poches tubulaires du type bande à cartouches selon les revendications 1 à 16, **caractérisées en ce que** la structure textile plate dotée d'un liant solidifié et d'un additif électroconducteur présente une force de traction maximale (dans le sens transversal) d'au moins 100 N/5 cm, de manière particulièrement préférée d'au moins 150 N/5 cm.

18. Poches tubulaires du type bande à cartouches selon les revendications 1 à 17, **caractérisées en ce que** la structure textile plate dotée d'un liant solidifié et d'un additif électroconducteur présente une résistance à la propagation du déchirement (dans le sens de la largeur) d'au moins 3 daN, de préférence d'au moins 5 daN.

19. Poches tubulaires du type bande à cartouches selon les revendications 1 à 18, **caractérisées en ce que** la structure textile plate dotée d'un liant solidifié et d'un additif électroconducteur présente une résistance à la propagation du déchirement (dans le sens transversal) d'au moins 3 daN, de préférence d'au moins 5 daN.

20. Poches tubulaires du type bande à cartouches selon les revendications 1 à 19, **caractérisées en ce que** la structure textile plate dotée d'un liant solidifié et d'un additif électroconducteur présente une pression d'éclatement de min 800kPa.

21. Poches tubulaires du type bande à cartouches selon les revendications 1 à 20, **caractérisées en ce que** la poche est remplie avec une pâte de plomb active.

22. Batteries d'accumulation de courant du type plomb-acide avec des électrodes, **caractérisées en ce qu'**au moins les électrodes positives sont formées par des poches tubulaires du type bande à cartouches selon l'une au moins des revendications 1 à 20 et que les poches tubulaires sont remplies avec une pâte de plomb active.

23. Batteries d'accumulation de courant selon la revendication 22, **caractérisées en ce que** les électrodes positives présentent encore un autre séparateur qui sépare les électrodes en poches tubulaires et la contre-électrode les unes des autres.
